Europäisches Patentamt

European Patent Office

Office européen des brevets

(19)

(11) Veröffentlichungsnummer: **0 242 348 B1**

# (12) EUROPÄISCHE PATENTSCHRIFT

(45) Veröffentlichungstag der Patentschrift:
06.03.91 Patentblatt 91/10

(51) Int. Cl.⁵: **F16H 57/00**

(21) Anmeldenummer: **87890029.9**

(22) Anmeldetag: **16.02.87**

(54) **Vorrichtung zur Geräuschminderung bei Zahnradtrieben mit wechselndem Richtungssinn des übertragbaren Drehmomentes.**

(30) Priorität: **18.02.86 AT 414/86**

(43) Veröffentlichungstag der Anmeldung:
**21.10.87 Patentblatt 87/43**

(45) Bekanntmachung des Hinweises auf die Patenterteilung:
**06.03.91 Patentblatt 91/10**

(84) Benannte Vertragsstaaten:
**DE ES FR GB IT NL SE**

(56) Entgegenhaltungen:
**DE-C- 338 958**
**US-A- 1 640 634**

(73) Patentinhaber: **STEYR-DAIMLER-PUCH Aktiengesellschaft**
**Postfach 62 Franz-Josefs-Kai 51**
**A-1011 Wien (AT)**

(72) Erfinder: **Valev, Assen, Dipl.-Ing Dr.**
**Schillersstrasse 15/3**
**A-4400 Steyr (AT)**
Erfinder: **Haas, Erwin, Dipl.-Ing**
**Wolfernstrasse 24**
**A-4400 Steyr (AT)**

**Beschreibung**

Die Erfindung betrifft eine Vorrichtung zur Geräuschminderung bei Zahnradtrieben mit wechselndem Richtungssinn des übertragbaren Drehmomentes.

Bei derartigen Zahnradtrieben kommt entsprechend dem augenblicklichen Richtungssinn des übertragbaren Drehmomentes beim Zahneingriff entweder das eine oder das andere Flankenpaar der Verzahnung zum Kraftschluß. Durch diesen ständigen hochfrequenten Anlagewechsel der Flanken wird ein unangenehmes und vergleichsweise starkes Geräusch erzeugt. Zur Geräuschdämpfung ist es bereits bekannt, auf der das in seinem Richtungssinn wechselnde Drehmoment übertragenden Welle ein freilaufendes Zahnrad vorzusehen, das die gleiche Verzahnungsgeometrie wie das zur Kraftübertragung dienende Zahnrad aufweist und auch mit demselben Gegenrad in Eingriff steht. Das freilaufende Zahnrad ist mit Hilfe einer Feder so verspannt, daß die beiden nebeneinander liegenden Zähne der benachbarten Räder die Zahnlücke des Gegenrades spielfrei ausfüllen. Beim Wechsel der Zahnflankenbelastung wirkt dann die vorhandene Federkraft geräuschdämpfend. Nachteilig ist hiebei, daß, da eine Kontaktunterbrechung der kraftübertragenden Zahnflanken nicht vollständig vermieden wird, keine ausreichende Geräuschdämpfung erzielt werden kann und daß bei einem aus mehreren in Eingriff stehenden Zahnrädern bestehenden Zahnradtrieb bei jedem zusammenwirkenden Zahnradpaar ein solches zusätzliches freilaufendes Zahnrad erforderlich ist. Ähnliches gilt für eine andere bekannte Vorrichtung, bei der das koaxiale, freilaufende Zahnrad, eine ihm benachbarten kraftübertragenden Zahnrad geringfügig unterschiedliche Zähnezahl aufweist, so daß es beim Betrieb etwas schneller bzw. langsamer als sein Nebenzahnrad dreht und somit die vom Nebenzahnrad nicht belastete Zahnflanke der Zahnlücke des Gegenrades berührt. Das freilaufende Zahnrad und sein kraftübertragendes Nebenrad sind außerdem federnd gegeneinander axial verspannt, so daß sich infolge der verschiedenen Umfangsgeschwindigkeiten an den Berührungsstirnflächen eine dämpfend wirkende Reibungskraft einstellt. Durch Abnützung der Berührungsflächen wird allerdings die Reibungskraft und damit auch die geräuschdämpfende Wirkung im Lauf der Zeit geringer.

Zum Stand der Technik ist weiterhin ein Verfahren zur Beseitigung störender Schwingungszustände eines beliebigen Bauteils bekannt (DE-C-338 958). Hier wird auf eine Welle eine unrunde Scheibe aufgekeilt, gegen welche Rollen drücken, die von Federn eingepreßt werden, welche sich andererseits gegen das Fundament der Maschine stützen. Die hieraus entstehenden Kräfte bringen, wenn die Welle umläuft, periodisch wechselnde Drehmomente auf die Maschinenwelle hervor. Damit dienen allein diese periodisch wechselnden Drehmomente zur Beseitigung störender Schwingungszustände.

Demgegenüber liegt der Erfindung die Aufgabe zugrunde, eine Vorrichtung zu schaffen, mit deren Hilfe es möglich ist, die durch den wechselnden Richtungssinn des übertragbaren Drehmoments sonst auftretenden Geräusche praktisch völlig zu vermeiden und insbesondere bei mehrrädrigen Zahnradtrieben - eine beträchtliche Verminderung des technischen Aufwandes zu erzielen.

Die Erfindung löst die gestellte Aufgabe dadurch, daß in an sich bekannter Weise auf der Welle des Zahnradtriebes, die das in seinem Richtungssinn wechselnde Drehmoment überträgt, ein Nocken mit einem durch Federkraft an ihn angedrückten Roll- oder Gleitkörper zur Erzeugung eines zusätzlichen wechselnden Drehmoments angeordnet ist, daß das zusätzliche Drehmoment durch die Winkellage und Form des Nockens gegeüber dem vom Zahnradantrieb zu übertragenden Drehmoment phasenverschoben ist und daß sich das am Nocken ergebende zusätzliche Drehmoment mit dem Wellendrehmoment zu einem gemeinsamen Drehmoment mit gleichbleibendem Richtungssinn summiert.

Es wird also mit Hilfe des vom Nocken und dem durch Federkraft an ihn angedrückten Roll- oder Gleitkörper gebildeten Nockentriebes dem Zahnradtrieb ein zusätzliches Drehmoment zugeführt, das zwar auch hinsichtlich seines Richtungssinnes wechselt, das aber durch die Winkellage und Form des Nockens gegenüber dem vom Zahnradtrieb zu übertragenden Drehmoment phasenverschoben ist, so daß sich ein Summenmoment ergibt, das keinen Wechsel des Richtungssinnes aufweist, womit Ursache der bisherigen Geräuschbildung beseitigt ist. Dabei braucht bei mehrrädrigen Zahnradtrieben der erfindungsgemäß gebildete Nockentrieb nur auf der durch das in seinem Richtungssinn wechselnde Drehmoment beaufschlagten Welle angeordnet zu werden, weil von deren Zahnrad nur mehr ein Drehmoment mit gleichbleibendem Richtungssinn übertragen wird. Die erfindungsgemäße Vorrichtung ist besonders für Zahnradtriebe zum Antrieb von Hubkolben-Kompressoren oder -pumpen mit geringer Zylinderzahl geeignet.

Der mit dem Nocken zusammenwirkende Rollen- oder Gleitkörper kann als federbelasteter Rollen- oder Flachstößel oder auch als Schwinghebel ausgebildet sein, und es ist auch möglich, anstelle einer Metallfeder eine Gasfeder od. dgl. vorzusehen. Eine besonders einfache Konstruktion wird aber dadurch erreicht, daß der Rollen- oder Gleitkörper an der Innenseite einer den Nocken etwa ringförmig umschließenden, vorzugsweise geschichteten Blattfeder befestigt ist, in welchem Falle die Blattfeder die Führung des Rollen- oder Gleitkörpers übernehmen kann und sich daher eine einfache Konstruktion mit geringem Herstellungsaufwand ergibt.

In der Zeichnung ist der Erfindungsgegenstand beispielsweise dargestellt, und zwar zeigen

Fig. 1 einen Antrieb eines einzylindrigen Hubkolbenkompressors mit einer erfindungsmäßen Vorrichtung zur Geräuschminderung im Axialschnitt,

Fig. 2 eine zugehörige Einzelheit im Querschnitt nach der Linie II-II der Fig. 1 und

Fig. 3 eine Ausführungsvariante in schematischer Schnittdarstellung nach Fig. 2.

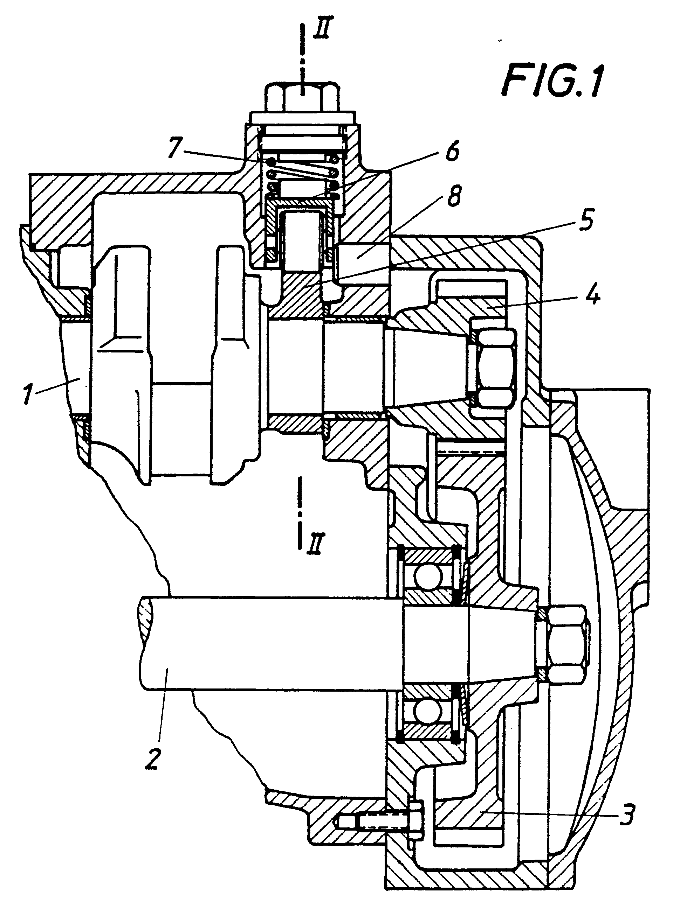

Die Kurbelwelle 1 des Kompressors wird von einer Welle 2 über einen Zahnradtrieb 3, 4 angetrieben, wobei die Kurbelwelle 1, auf der das Stirnrad 4 des Zahnradtriebes sitzt, jene Welle ist, die das in seinem Richtungssinn wechselnde Drehmoment überträgt. Erfindungsgemäß ist nun auf dieser Welle ein Nocken 5 angeordnet, mit dem ein Rollenstößel 6 zusammenwirkt, der durch eine Druckfeder 7 belastet ist. Der zylindrische Rollenstößel 6 ist an der einen (rechten Seite gemäß Fig. 1) Seite abgeflacht und gleitet mit seiner Abflachung an der Stirnfläche eines Bolzens 8, so daß der Rollenstößel 6 an Drehung gehindert ist. Der Nocken 5 ist gegenüber der Kurbel so angeordnet, daß sich die Drehmomente von Kurbel und Nocken zu einem gemeinsamen Drehmoment mit stets gleichbleibendem Richtungssinn summieren.

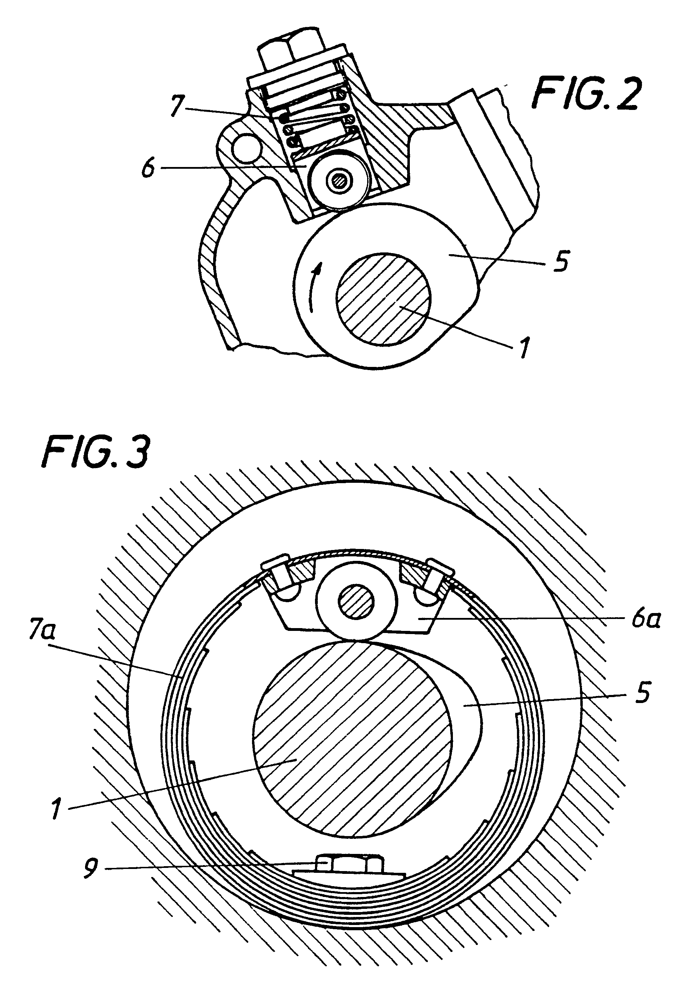

Fig. 3 zeigt eine andere mögliche Ausführungsform, bei der der dem Stößel 6 entsprechende Druckkörper 6a im Inneren einer den Nocken 5 umschließenden, mehrfach geschichteten, zu einem Kreis gebogenen Blattfeder 7a befestigt und die Blattfeder 7a ihrerseits in einer Gehäusebohrung durch eine Schraube 9 festgehalten ist.

## Ansprüche

1. Vorrichtung zur Geräuschminderung bei Zahnradtrieben mit wechselndem Richtungssinn des übertragbaren Drehmoments, dadurch gekennzeichnet, daß auf der Welle (1) des Zahnradtriebes (3, 4), die das in seinem Richtungssinn wechselnde Drehmoment überträgt, ein Nocken (5) mit einem durch Federkraft an ihn angedrückten Roll- oder Gleitkörper (6, 6a) zur Erzeugung eines zusätzlichen wechselnden Drehmoments angeordnet ist, daß das zusätzliche Drehmoment durch die Winkellage und Form des Nockens (5) gegenüber dem vom Zahnradantrieb übertragenden Drehmoment phasenverschoben ist, und daß sich das am Nocken (5) ergebende zusätzliche Drehmoment mit dem Wellendrehmoment zu einem gemeinsamen Drehmoment mit gleichbleibendem Richtungssinn summiert.

2. Vorrichtung nach Anspruch 1, dadurch gekennzeichnet, daß der Roll- oder Gleitkörper (6, 6a) an der Innenseite einer den Nocken (5) etwa ringförmig umschließenden, vorzugsweise geschichteten Blattfeder (7, 8) befestigt ist.

## Claims

1. A device for reducing the noise in gear trains for transmitting a torque in a continually reversed sense, characterized in that a cam (5) is provided on that shaft (1) of the gear train (3, 4) by which the torque in a changing sense is transmitted, an additional changing torque is produced by the cooperation of said cam (5) with a rolling or sliding member (6, 6a), which is spring-urged against the cam (5), said additional torque has relative to the torque to be transmitted by the gear train a phase displacement that depends on the angular position and the shape of the cam (5), and the additional torque which is effective at the cam (5) is summed up with the torque of the shaft to provide a resultant torque having a constant sense.

2. A device according to claim 1, characterized in that the rolling or sliding member (6, 6a) is secured to the inside surface of an approximately annular, preferably laminated leaf spring (7, 8) which surrounds the cam (5).

## Revendications

1. Dispositif pour l'amoindrissement du bruit d'engrenages à sens variable de la direction du couple transmis, caractérisé en ce que sur l'arbre (1) de l'engrenage (3, 4) qui transmet le couple variable dans le sens de sa direction est montée une came (5) avec un galet ou une pièce glissante (6, 6a) exerçant une pression sur cette came par la force d'un ressort, afin de produire un couple variable supplémentaire ; en ce que le couple supplémentaire est déphasé, par la position angulaire et la forme de la came (5), par rapport au couple transmis par les engrenages et en ce que le couple supplémentaire produit sur la came (5) s'ajoute au couple de l'arbre en un couple commun à sens restant constant de sa direction.

2. Dispositif suivant la revendication 1, caractérisé par le fait que le galet ou la pièce glissante (6a, 6b) est fixé par l'intérieur d'un ressort à lames (7, 8) de préférence à plusieurs lames superposées entourant la came (5) un peu comme un anneau.

FIG.1

FIG.2

FIG.3